# EUROPÄISCHE PATENTANMELDUNG

(11) **EP 4 606 687 A1**
(43) Veröffentlichungstag der Anmeldung: **27.08.2025**
(21) Anmeldenummer: 25158544.4
(22) Anmeldetag: 18.02.2025
(51) Int. Cl.: B62M 6/40, B62M 6/90

(54) **FAHRRAD**

(30) Priorität: 22.02.2024 DE 102024105053
(71) Anmelder: Horsch Maschinen GmbH, 92421 Schwandorf (DE)
(72) Erfinder: Horsch, David, 69120 Heidelberg (DE)
(74) Vertreter: v. Bezold & Partner Patentanwälte - PartG mbB

(57) **Zusammenfassung**

Die Erfindung betrifft ein Fahrrad (10), insbesondere ein Elektrofahrrad (10), mit einem Fahrradrahmen (12), einer Antriebseinheit (38), welche zur Krafteinleitung über eine Tretkurbel (40) und/oder einen Elektromotor (42) eingerichtet ist, einer Energieversorgungseinheit (44), welche mit dem Elektromotor (42) gekoppelt ist und eingerichtet ist, den Elektromotor (42) mit Energie zu versorgen, sowie mit einer Ladeanschlussbuchse (50) mit einem Ladeanschluss (52), wobei der Ladeanschluss (52) mit der Energieversorgungseinheit (44) verbunden ist und wobei der Ladeanschluss (52) zur Koppelung der Energieversorgungseinheit (44) mit einer Ladestation eingerichtet ist. Um die Ladeanschlussbuchse (50) vor Staub, Schmutz, Feuchtigkeit und dergl. zu schützen ist erfindungsgemäß eine Abdeckung (60) vorgesehen, welche zum Verschließen des Ladeanschluss (52) eingerichtet ist und welche mittels magnetischer Kraft fixiert ist, insbesondere ausschließlich mittels magnetischer Kraft an der Ladeanschlussbuchse (50) fixiert ist.

## Beschreibung

Die vorliegende Erfindung betrifft ein Fahrrad, insbesondere ein Elektrofahrrad.

Fahrräder, insbesondere Elektrofahrräder, bei welchen die von einer Fahrperson in eine Tretkurbel eingeleitete humane Antriebsleistung wahlweise durch eine entsprechende elektromotorische Antriebsleistung ergänzt werden kann, finden zunehmend starke Verbreitung. Derartige, bspw. auch als Pedelec oder E-Bikes ausgeführte Elektrofahrräder umfassen jeweils einen Elektromotor, welcher mit einer Energieversorgungseinheit, die eingerichtet ist, den Elektromotor mit Energie zu versorgen, gekoppelt ist. Zum Laden der Energieversorgungseinheit umfasst diese einen Ladeanschluss, mittels welchem die Energieversorgungseinheit mit einer externen Ladestation gekoppelt werden kann. Der Ladeanschluss wird häufig durch eine Aufnahmeöffnung in einer, den Fahrradrahmen bildenden Rohrkonstruktion hindurchgeführt. Um den Ladeanschluss vor Staub, Schmutz, Wasser oder dergl. zu schützen, kann dieser in der Regel mit einer Abdeckung verschlossen werden.

Die Montage der Abdeckungen am Fahrrad, respektive am Gehäuse des Ladeanschluss, erfolgt in der Regel mittels einer an sich bekannten Scharnierkonstruktion, d.h. dass das Scharnier einen durch die Abdeckung gebildeten ersten Scharnierlappen und einen durch das Gehäuse des Ladeanschluss gebildeten zweiten Scharnierlappen umfasst, und die Scharnierlappen mittels eines Scharnierbolzen schwenkbar zueinander verbunden sind.

Abdeckungen mit Scharnieren benötigen jedoch in der Regel viel Bauraum, wodurch deren Integration in einen Fahrradrahmen nur bedingt möglich ist. Ein weiterer Nachteil derartiger Scharniere besteht darin, dass diese durch eine zu hohe Krafteinwirkung, bspw. durch ein sog. "Hängenbleiben" beschädigt werden können. Zudem kann durch dieses "Hängenbleiben" auch die Fahrperson verletzt werden.

Aufgabe der Erfindung ist es somit, die beschriebenen Nachteile des Standes der Technik zu beseitigen. Insbesondere soll ein Fahrrad mit einer verbesserten Abdeckung für einen Ladeanschluss geschaffen werden.

Diese Aufgaben werden gelöst durch ein Fahrrad, mit den Merkmalen des unabhängigen Anspruchs 1. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft ein Fahrrad, insbesondere ein Elektrofahrrad. Das Fahrrad, insbesondere das Elektrofahrrad, kann bevorzugt jegliche Art von E-Bike, Pedelec, E-Rennrad und/oder dergl. Fahrrad sein.

Das Fahrrad umfasst zumindest einen Fahrradrahmen.

Das Fahrrad umfasst zudem zumindest eine Antriebseinheit, welche zur Krafteinleitung über eine Tretkurbel und/oder einen Elektromotor eingerichtet ist. Bevorzugt ist die Antriebseinheit derartig ausgebildet, dass die Größe der durch einen Elektromotor bereitgestellten Krafteinleitung bspw. durch eine Fahrperson verändert werden kann. Die jeweilige durch den Elektromotor bereitgestellte Krafteinleitung kann bspw. durch ein mobiles Endgerät variabel durch eine Fahrperson eingestellt werden.

Zur Versorgung des Elektromotors mit der jeweiligen benötigten Energie umfasst das Fahrrad zudem zumindest eine Energieversorgungseinheit, welche mit dem Elektromotor gekoppelt ist und eingerichtet ist, den Elektromotor mit Energie zu versorgen. Die Energieversorgungseinheit ist bevorzugt durch einen Akku gebildet, insbesondere durch einen Intube-Akku gebildet, welcher Intub-Akku bspw. in den Fahrradrahmen integriert ist, bevorzugt in zumindest einen Rohrabschnitt des durch eine Rohrkonstruktion gebildeten Fahrradrahmen integriert ist. Durch einen derartigen Intube-Akku kann eine sehr platzsparende Energieversorgungseinheit zur Verfügung gestellt werden.

Um die Energieversorgungseinheit nach deren Entladung wieder aufladen zu können, umfasst das Fahrrad zudem zumindest eine Ladeanschlussbuchse mit einem Ladeanschluss, wobei der Ladeanschluss mit der Energieversorgungseinheit verbunden ist und wobei der Ladeanschluss zur Koppelung der Energieversorgungseinheit mit einer Ladestation eingerichtet ist. Die Verbindung des Ladeanschluss mit der Energieversorgungeinheit kann bevorzugt durch eine Kabelverbindung erfolgen, alternativ oder ergänzend kann die Verbindung auch erfolgen, indem der Ladeanschluss in die Energieversorgungseinheit integriert ist.

Um die Ladeanschlussbuchse, respektive den Ladeanschluss vor Staub, Schmutz, Feuchtigkeit und dergl. zu schützen, ist erfindungsgemäß eine Abdeckung vorgesehen, welche zum Verschließen des Ladeanschluss eingerichtet ist und welche mittels magnetischer Kraft gegenüber dem Ladeanschluss fixiert ist, insbesondere ausschließlich mittels magnetischer Kraft gegenüber dem Ladeanschluss an der Ladeanschlussbuchse fixiert ist.

Die Erfindung macht sich die Erkenntnis zu Nutze, dass durch eine Abdeckung, deren Verschließkraft ausschließlich durch magnetische Kraft erzeugt wird, keine Scharniere, Verriegelungen oder dergl. benötigt werden, wodurch der für die Abdeckung benötigte Bauraum wesentlich verringert werden kann und zudem Beschädigungen bei zu hohen Krafteinwirkungen durch bspw. ein "Hängenbleiben" vermieden werden können. Insbesondere bietet die magnetische Fixierung den Vorteil, dass sich bei einer Überschreitung der magnetischen Kraft die Abdeckung vor einer Beschädigung von der Ladeanschlussbuchse lösen kann. Nach einem Lösen kann anschließend die Abdeckung wiederum ohne weitere Hilfsmittel, Werkzeuge oder dergl. wieder montiert werden.

Die Ladeanschlussbuchse, respektive der Ladeanschluss ist als ein an sich bekannter Charge-Port ausgeführt. Erfindungsgemäß ist somit insbesondere vorgesehen, dass die Abdeckung mittels magnetischer Kraft an diesem Charge-Port, zum Verschließen des Charge-Port, fixiert wird. Die Ladeanschlussbuchse ist bevorzugt ein Ladeanschlussgehäuse mit einem Integrierten Ladeanschluss.

Die magnetische Kraft kann durch eine geeignete Materialpaarung erzeugt werden. Wobei zur Erzeugung der magnetischen Materialpaarung, die Ladeanschlussbuchse und/oder zumindest ein Abschnitt des Fahrradrahmen und/oder die Abdeckung aus einem magnetischen Werkstoff gefertigt ist und/oder mit einem magnetischen Bauteil verbunden (z.B. angebracht, angebaut) ist und/oder ein magnetisches Bauteil in dieses integriert (z.B. vergossen) ist. Insbesondere kann die Abdeckung aus einem magnetischen Werkstoff (z.B. ferromagnetisches Metall) gefertigt sein und an der Ladeanschlussbuchse kann ein magnetisches Bauteil angebracht sein. Das magnetische Bauteil kann bspw. ein Dauermagnet sein. Insbesondere kann anhand der Materialpaarung die Größe der magnetischen Kraft beeinflusst, respektive definiert werden. Gemäß einer alternativen Ausführungsvariante kann das magnetische Bauteil ein Elektromagnet sein. Bevorzugt weist der magnetische Werkstoff und/oder das magnetische Bauteil ferromagnetische Eigenschaften auf.

Um die Abdeckung während des Ladevorgang nicht entfernen zu müssen und somit bspw. keine Aufbewahrungsstelle oder zusätzliche Bauteile zu benötigen, ist es gemäß einer Weiterbildung der Erfindung möglich, dass eine derartige Anordnung der magnetischen Materialpaarung vorgesehen ist, dass die Abdeckung gegenüber dem Ladeanschluss in einer geöffneten, den Ladeanschluss freilegenden, Stellung und einer geschlossenen, den Ladeanschluss verschließenden, Stellung fixierbar ist. Wobei die Fixierung jeweils insbesondere ohne zusätzliche Bauteile erfolgen kann. D.h. die Fixierung kann derartig erfolgen, dass auf weitere Elemente zur Fixierung wie bspw. Federn Ketten und/oder dergl. verzichtet werden kann. Bevorzugt ist die Ausrichtung und die Anordnung der magnetischen Materialpaarung derartig gewählt, dass sich die Abdeckung und die Landanschlussbuchse permanent gegenseitig, d.h. unabhängig von der geöffneten oder der geschlossenen Stellung der Abdeckung, anziehen.

Gemäß einer Weiterbildung der Erfindung kann vorgesehen sein, dass die Abdeckung werkzeuglos von dem Fahrrad entfernbar ist. Insbesondere kann die durch die magnetische Materialpaarung erzeugte Kraft derartig definiert sein, dass die Abdeckung durch eine Fahrperson werkzeuglos entnommen werden kann, jedoch die Kraft um den Ladeanschluss zu Verschließen ausreichend groß ist, um einen Verlust während des Fahrradfahrens zu verhindern.

Gemäß einer besonders bevorzugten Ausführungsvariante ist somit vorgesehen, dass die Abdeckung ausschließlich mittels der magnetischen Kraft gegenüber dem Ladeanschluss fixiert (d.h. gehaltert) ist, insbesondere ausschließlich mittels der magnetischen Kraft an der Ladeanschlussbuchse fixiert (d.h. gehaltert) ist. Insbesondere werken keine zusätzlichen Verbindungskomponenten, Montagekomponenten und/oder dergl. zur Fixierung der Abdeckung benötigt.

Zur verbesserten Handhabung der Abdeckung kann gemäß einer Weiterbildung der Erfindung vorgesehen sein, dass die Abdeckung mittels einer Gleitlagerung schwenkbar gegenüber dem Ladeanschluss, respektive der Ladeanschlussbuchse gelagert ist, wobei die Gleitlagerung durch zwei ineinandergleitende Halbschalen gebildet ist und wobei die Halbschalen durch magnetische Kraft zueinander fixiert sind. Die Gleitlagerung, d.h. die Abdeckung und die Ladeanschlussbuchse sind insbesondere ohne zusätzliche Scharnierbolzen, Verbindungsstifte, Verbindungbolzen oder dergl. verbunden, wodurch wiederum die Abdeckung werkzeuglos vom Fahrrad entfernbar ist. Insbesondere bildet die Gleitlagerung ein Drehgelenk, ein Kugelgelenk, ein Scharniergelenk und/oder dergl. ohne die Verwendung von Scharnierbolzen oder dergl.

Es sei darauf hingewiesen, dass im Kontext der Erfindung, von der Definition "Halbschale" jegliche, zumindest abschnittweise kreisförmige und/oder ineinandergleitende Formen umfasst sind, somit zweckmäßig insbesondere auch jegliche bogenförmige Abschnitte, kugelförmige Abschnitte und/oder dergl. welche nicht zwingen einen Halbkreis bilden müssen.

Eine bevorzugte Ausführungsvariante kann vorgesehen, dass eine Halbschale, durch eine zumindest abschnittweise im Wesentlichen kreisförmige, Vertiefung gebildet ist und ein Halbschale, durch eine zu dieser Vertiefung korrespondierende, im zumindest abschnittweise im Wesentlichen kreisförmige, Erhebung gebildet ist. Bevorzug ist eine Halbschale, vorzugsweise die Erhebung, der Abdeckung zugeordnet und eine Halbschale, vorzugsweise die Vertiefung, der Ladeanschlussbuchse zugeordnet. Die Halbschale ist insbesondere integraler Bestandteil der Abdeckung, d.h. die Abdeckung und die Halbschale können durch ein Bauteil gebildet sein.

Durch die Verwendung von jeweiligen korrespondierenden Halbschalen kann somit die Fixierung der Abdeckung an der Landeanschlussbuchse nochmals wesentlich verbessert werden. Insbesondere wird die Abdeckung somit sowohl durch eine magnetische Kraft fixiert als auch durch einen sich durch die Halbschalen ausgebildeten Formschluss gegen Verdrehen gesichert.

Zur Schaffung eines großen Schwenkbereich der Abdeckung zwischen der geschlossenen und der geöffneten Stellung ist es gemäß einer Weiterbildung der Erfindung denkbar, dass zumindest eine der Halbschalen, insbesondere die Vertiefung, eine geringere Gesamthöhe aufweist als dessen Radius.

Ein verbesserter Schutz gegen Staub, Schmutz, Feuchtigkeit und dergl. wird gemäß einer Weiterbildung der Erfindung dadurch erreicht, dass zwischen der Abdeckung und der Ladeanschlussbuchse und/oder dem Fahrradrahmen ein Dichtungselement angeordnet ist. Das Dichtungselement kann insbesondere in eine dafür vorgesehene Tasche der Ladeanschlussbuchse eingelegt sein. Im Abdeckelement kann eine, zu dem Dichtungselement korrespondierende Ausprägung vorgesehen sein, um somit die Dichtungswirkung noch weiter zu verbessern.

Gemäß einer alternativen oder ergänzenden Ausführungsvariante ist es möglich, dass zur Erreichung einer ausreichenden Abdichtung mittels des Dichtungselementes die magnetische Materialpaarung derartig ausgeführt ist, dass die Größe der magnetischen Kraft derartig groß ist, dass das Dichtungselement in der verschlossenen Position der Abdeckung, in dessen Höhe um mindestens 5% oder mindestens 10% oder mindestens 25% gestaucht wird. Das Dichtungselement kann aus einem flexiblen Material wie bspw. EPDM-Schaumstoff, Polyurethan und/oder dergl. gebildet sein.

Der Fahrradrahmen kann bevorzugt durch eine Rohrkonstruktion gebildet sein, wobei zumindest einem Rohrabschnitt der Rohrkonstruktion zumindest eine Aufnahmeöffnung zugeordnet sein kann und wobei die Ladeanschlussbuchse insbesondere in der Aufnahmeöffnung angeordnet sein kann.

Eine bevorzugte Bauweise des Fahrrad kann vorsehen, dass die Ladeanschlussbuchse derartig in der Aufnahmeöffnung angeordnet ist, dass in der geschlossenen Position der Abdeckung, die Oberseite der Abdeckung zumindest nahezu bündig mit der Mantelfläche des Rohrabschnittes abschließt oder dass ein Überstand über die Mantelfläche maximal 2mm oder maximal 5mm oder maximal 15mm beträgt.

Bevorzugt kann die Aufnahmeöffnung einer Oberseite eines Rohrabschnitt der Rohrkonstruktion zugeordnet sein, insbesondere einer Oberseite eines das Unterrohr bildenden Rohrabschnitt zugeordnet sein.

Der Fahrradrahmen, insbesondere die Rohrkonstruktion kann bspw. einen Diamant-Rahmen, einen Trapez-Rahmen, einen Wave-Rahmen, einen MTB-Rahmen und/oder dergl. bilden. Die Aufnahmeöffnung, respektive die Ladeanschlussbuchse kann insbesondere einem Unterrohr und/oder einem Oberrohr und/oder einem Sitzrohr zugeordnet sein, wodurch wiederum die Ladeanschlussbuchse im Inneren des Unterrohr und/oder Oberrohr und/oder Sitzrohr angeordnet sein kann.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Seitenansicht eines als Elektrofahrrad ausgeführten Fahrrad,
- Figur 2: eine Perspektivansicht einer Ausführungsvariante einer Ladeanschlussbuchse mit einer in einer geöffneten Stellung angeordneten Abdeckung,
- Figur 3A: eine Schnittansicht eines Abschnitt des Fahrradrahmen mit einer Aufnahmeöffnung und einer in der Aufnahmeöffnung angeordneten Ladeanschlussbuchse,
- Figur 3B: eine Detailansicht der Ladeanschlussbuchse gemäß der Figur 3A.

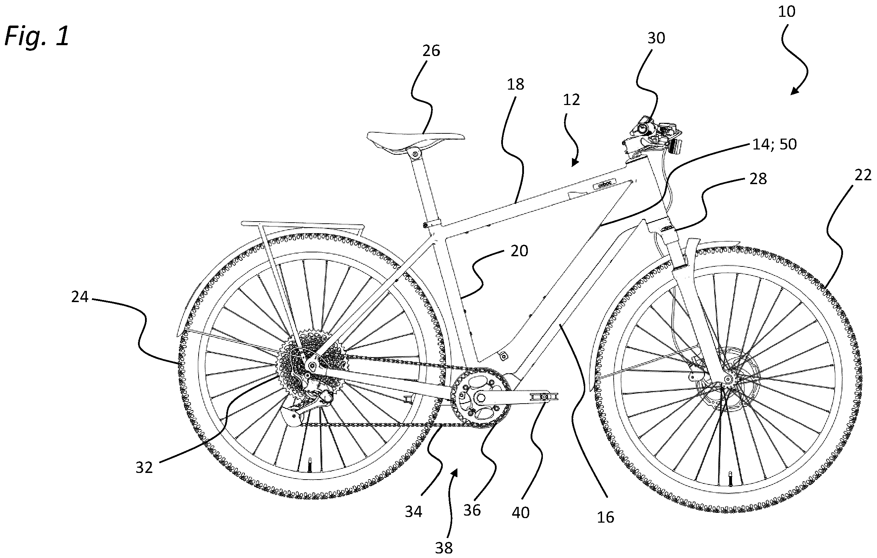

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1 bis 3 zeigen unterschiedliche Ansichten eines Ausführungsbeispiels eines als Elektrofahrrad 10 ausgeführten Fahrrad 10 mit einem Fahrradrahmen 12 und einer in dem Fahrradrahmen 12 angeordneten Ladeanschlussbuchse 50, die unter gemeinsamer Bezugnahme auf die Figuren 1 bis 3 beschrieben werden.

Das Fahrrad 10 ist als Elektrofahrrad 10 in Form eines Pedelec ausgeführt, könnte alternativ oder ergänzend auch als E-Bike ausgeführt sein.

Das Fahrrad 10 umfasst einen Fahrradrahmen 12, welcher durch eine Rohrkonstruktion gebildet ist. Die Rohrkonstruktion bildet gemäß dem Ausführungsbeispiel insbesondere einen Diamant-Rahmen.

Die Fahrradrahmen 12 umfasst eine Aufnahmeöffnung 14, insbesondere ist die Aufnahmeöffnung 14 einer Oberseite des Unterrohr 16 der Rahmenkonstruktion zugeordnet, könnte jedoch auch dem Oberrohr, dem Sitzrohr oder jeglichen anderem Rohrabschnitt der Rahmenkonstruktion zugeordnet sein. Auch könnte die Aufnahmeöffnung 14 seitlich an einem Rohrabschnitt der Rahmenkonstruktion angebracht sein oder an einer Unterseite eines Rohrabschnitt der Rahmenkonstruktion angerbracht sein.

Am Fahrradrahmen 12 sind zudem ein Vorderrad 22 und ein Hinterrad 24 sowie ein Sattel 26 angebracht. Das Vorderrad 22 ist über eine, als Feder ausgeführte, Radgabel 28 mittels eines Lenkers 30 lenkbar am Fahrradrahmen 12 angebracht. Zum Antreiben des Fahrrad 10 ist das Hinterrad 24 mittels eines Zahnradpaket 32, einer Kette 34 und Kettenblätter 36 mit einer Antriebseinheit 38 verbunden.

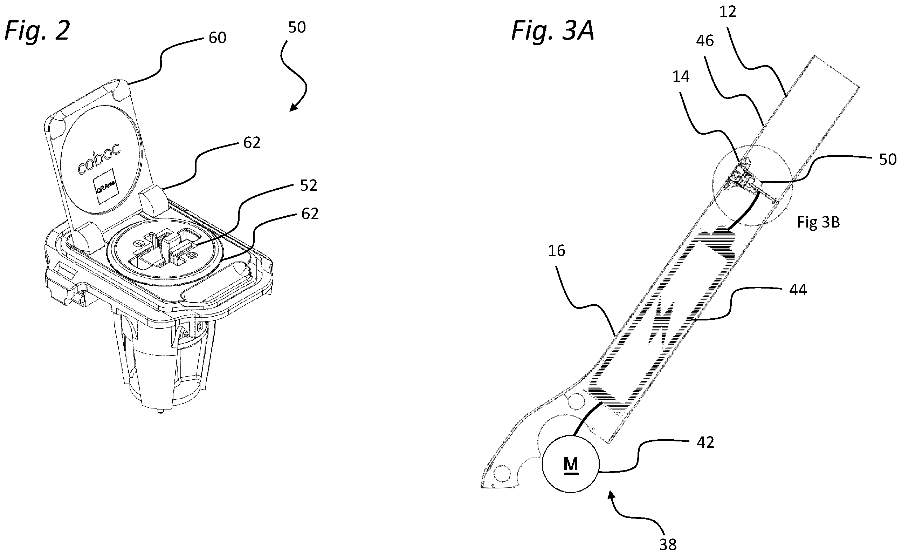

Die Antriebseinheit 38 ist zur Krafteinleitung über eine Tretkurbel 40 und/oder einen, gemäß der Figur 3A als Prinzipskizze dargestellten, Elektromotor 42 eingerichtet. Durch eine derartige Anordnung hat eine jeweilige Fahrperson insbesondere die Auswahloption, wie groß die durch den Elektromotor 42 bereitgestellte Krafteinleitung und somit die Unterstützung während der Fahrt ist. Der Elektromotor 42 ist bevorzugt als Mittelmotor ausgeführt.

Um den Elektromotor 42 mit der benötigten Energie zu versorgen ist, gemäß der Figur 3A als Prinzipskizze dargestellt, eine Energieversorgungseinheit 44 vorgesehen. Die Energieversorgungseinheit 44 ist hierbei in einem Rohrabschnitt, insbesondere im Unterrohr 16, der Rahmenkonstruktion integriert und als Intube-Akku ausgebildet.

Zur Verbindung der Energieversorgungeinheit 44 mit einer externen Ladestation umfasst das Fahrrad 10 eine in der Aufnahmeöffnung 14 angeordnete Ladeanschlussbuchse 50 mit einem Ladeanschluss 52. Die Ladeanschlussbuchse 50 ist mittels einer Montageschraube 54 am Fahrradrahmen 12 montierbar. Zur Abdichtung ist zwischen dem Fahrradrahmen 12 und der Ladeanschlussbuchse 50 ein Abdichtring56 (z.B. O-Ring) vorgesehen.

Die Verbindung des Ladeanschluss 52 mit der Energieversorgungseinheit 44, sowie der Energieversorgungseinheit 44 mit dem Elektromotor 42 erfolgt bspw. mittels einer, durch eine Linie schematisch dargestellte, Kabelverbindung.

Die Ladeanschlussbuchse 50 ist mittels einer Abdeckung 60 verschließbar.

Die Abdeckung 50 ist insbesondere mittels magnetischer Kraft gegenüber dem Ladeanschluss 52 an der Ladeanschlussbuchse 50 fixiert, insbesondere ist die Abdeckung 50 ausschließlich mittels magnetischer Kraft gegenüber dem Ladeanschluss 52 an der Ladeanschlussbuchse 50 fixiert.

Die magnetische Kraft kann durch eine entsprechende magnetische Materialpaarung erzeugt werden. Wobei gemäß dem Ausführungsbeispiel insbesondere die Abdeckung 60 aus einem magnetischen Werkstoff gefertigt ist und wobei die Ladeanschlussbuchse 50 mit einem magnetischen Bauteil 58 verbunden ist, wobei wiederum das magnetische Bauteil 58 durch einen Dauermagneten gebildet ist.

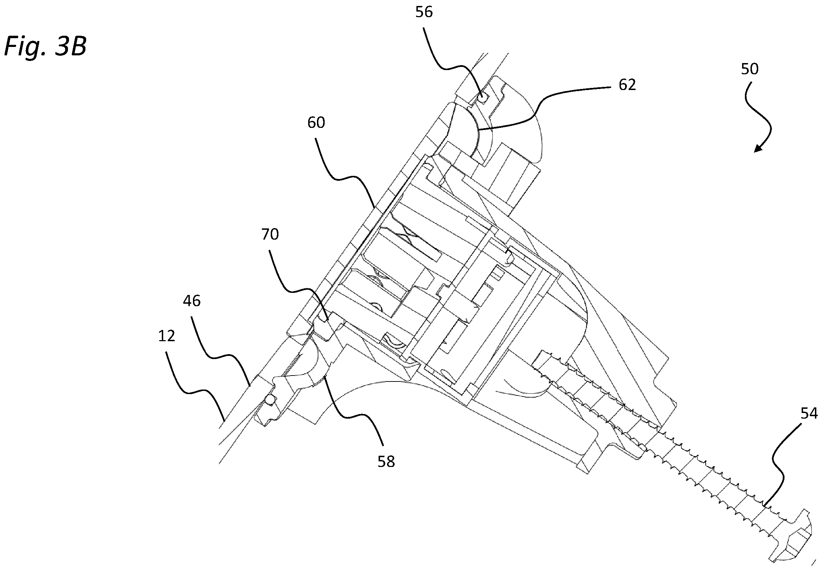

Gemäß der Figur 2 ist die Abdeckung 60 gegenüber dem Ladeanschluss 52 in einer geöffneten, den Ladeanschluss 52 freilegenden, Stellung und gemäß der Figuren 3A und 3B in einer geschlossenen, den Ladeanschluss 52 verschließenden, Stellung dargestellt. Wobei insbesondere die magnetische Materialpaarung derartig ausgelegt sein kann, dass die Abdeckung 60 sowohl in der geschlossenen als auch in der geöffneten Stellung fixierbar ist.

Dadurch, dass die Abdeckung 60 durch magnetische Kraft fixiert ist, insbesondere ausschließlich durch magnetische Kraft fixiert ist, ist es möglich, dass die Abdeckung 60 werkzeuglos vom Fahrrad 10, respektive vom Fahrradrahmen 12 entfernbar ist.

Um die Abdeckung 60 für einen Ladevorgang in eine geöffnete Stellung verschwenken zu können, ist zudem eine Gleitlagerung vorgesehen. Die Gleitlagerung wird durch zwei ineinandergleitende Halbschalen 62 gebildet, welche Halbschalen 62 durch magnetische Kraft verbunden sind. Die Gleitlagerung bildet somit ein Drehgelenk ohne Scharnierbolzen oder dergl. Gemäß dem Ausführungsbeispiel wird eine Halbschale 62 durch eine im wesentlichen kreisförmige Vertiefung und eine Halbschale 62 durch eine, zu dieser Vertiefung korrespondierende, im wesentlichen kreisförmige Erhebung gebildet. Wobei die Erhebung der Abdeckung 60 zugeordnet ist und wobei die Vertiefung der Ladeanschlussbuchse 50 zugeordnet ist.

Die Halbschalen 62 bilden somit eine Formschlüssige Verbindung, deren Komponenten mittels magnetischer Kraft zueinander fixiert sind.

Zwischen der Abdeckung 60 und der Ladeanschlussbuchse 50 ist ein Dichtungselement 70 angeordnet. Wobei das Dichtungselement 70 mittels der auf die Abdeckung 60 wirkenden magnetischen Kraft derartig gestaucht wird, dass eine ausreichende Dichtungswirkung erreicht wird.

Wie insbesondere aus der Figur 3B hervorgeht, wird durch die Fixierung der Abdeckung 60 durch magnetische Kraft eine Kompakt bauende Abdeckung 60 für den Ladeanschluss 52 geschaffen. Insbesondere ist die Abdeckung 60 und deren Anordnung am Fahrradrahmen 12 derartig ausgeführt, dass in der geschlossenen Position der Abdeckung 60, die Oberseite der Abdeckung 60 zumindest nahezu bündig mit der Mantelfläche 46 des Rohrabschnittes abschließt. Alternativ könnte der Überstand über die Mantelfläche 46 auch maximal 2mm oder maximal 5mm oder maximal 10mm betragen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet, werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste:**

| | | | |
|---|---|---|---|
| 10 | Fahrrad; Elektrofahrrad | 40 | Tretkurbel |
| 12 | Fahrradrahmen | 42 | Elektromotor |
| 14 | Aufnahmeöffnung | 44 | Energieversorgungseinheit |
| 16 | Unterrohr | 46 | Mantelfläche |
| 18 | Oberrohr | | |
| 20 | Sitzrohr | 50 | Ladeanschlussbuchse |
| 22 | Vorderrad | 52 | Ladeanschluss |
| 24 | Hinterrad | 54 | Magnetschraube |
| 26 | Sattel | 56 | Abdichtring |
| 28 | Radgabel | 58 | Magnetisches Bauteil |
| 30 | Lenker | 60 | Abdeckung |
| 32 | Zahnradpaket | 62 | Halbschale |
| 34 | Kette | | |
| 36 | Kettenblätter | 70 | Dichtungselement |
| 38 | Antriebseinheit | | |

## Patentansprüche

1. Fahrrad (10), insbesondere Elektrofahrrad (10), umfassend zumindest,
- einen Fahrradrahmen (12),
- eine Antriebseinheit (38), welche zur Krafteinleitung über eine Tretkurbel (40) und/oder einen Elektromotor (42) eingerichtet ist,
- eine Energieversorgungseinheit (44), welche mit dem Elektromotor (42) gekoppelt ist und eingerichtet ist, den Elektromotor (42) mit Energie zu versorgen,
- eine Ladeanschlussbuchse (50) mit einem Ladeanschluss (52), wobei der Ladeanschluss (52) mit der Energieversorgungseinheit (44) verbunden ist und wobei der Ladeanschluss (52) zur Koppelung der Energieversorgungseinheit (44) mit einer Ladestation eingerichtet ist, **gekennzeichnet durch**, eine Abdeckung (60), welche zum Verschließen des Ladeanschluss (52) eingerichtet ist und welche mittels magnetischer Kraft gegenüber dem Ladeanschluss (52) fixiert ist, insbesondere ausschließlich mittels magnetischer Kraft gegenüber dem Ladeanschluss (52) an der Ladeanschlussbuchse (50) fixiert ist.

2. Fahrrad (10) nach Anspruch 1, **gekennzeichnet durch**, eine magnetische Materialpaarung die zur Erzeugung der magnetischen Kraft eingerichtet ist, wobei zur Erzeugung der magnetischen Materialpaarung,
- die Ladeanschlussbuchse (50) und/oder
- zumindest ein Abschnitt des Fahrradrahmen (12) und/oder
- die Abdeckung (60)
aus einem magnetischen Werkstoff gefertigt ist und/oder mit einem magnetischen Bauteil (58) verbunden ist und/oder ein magnetisches Bauteil (58) in dieses integriert ist.

3. Fahrrad (10) nach Anspruch 2, **gekennzeichnet durch**, eine derartige Anordnung der magnetischen Materialpaarung, dass die Abdeckung (60) gegenüber dem Ladeanschluss (52) in einer geöffneten, den Ladeanschluss (52) freilegenden, Stellung und einer geschlossenen, den Ladeanschluss (52) verschließenden, Stellung fixierbar ist, insbesondere ohne zusätzliche Bauteile fixierbar ist.

4. Fahrrad (10) nach einem der vorhergehenden Ansprüche, **dadurch gekennzeichnet, dass**
- die Abdeckung (60) werkzeuglos von dem Fahrrad (10) entfernbar ist und/oder
- die Abdeckung (60) ausschließlich mittels der magnetischen Kraft gegenüber dem Ladeanschluss (52) fixiert ist, insbesondere ausschließlich mittels der magnetischen Kraft an der Ladeanschlussbuchse (50) fixiert ist.

5. Fahrrad (10) nach einem der vorhergehenden Ansprüche, **dadurch gekennzeichnet, dass** die Abdeckung (60) mittels einer Gleitlagerung schwenkbar gegenüber dem Ladeanschluss (52) gelagert ist, wobei die Gleitlagerung durch zwei ineinandergleitende Halbschalen (62) gebildet ist und wobei die Halbschalen (62) durch magnetische Kraft zueinander fixiert sind.

6. Fahrrad (10) nach Anspruch 5, **dadurch gekennzeichnet, dass**
- eine Halbschale (62), durch eine zumindest abschnittweise im Wesentlichen kreisförmige, Vertiefung gebildet ist und
- eine Halbschale (62), durch eine zu dieser Vertiefung korrespondierende, im zumindest abschnittweise im Wesentlichen kreisförmige, Erhebung gebildet ist, wobei
- eine Halbschale (62), vorzugsweise die Erhebung, der Abdeckung (60) zugeordnet ist und
- eine Halbschale (62), vorzugsweise die Vertiefung, der Ladeanschlussbuchse (50) zugeordnet ist.

7. Fahrrad (10) nach zumindest einen der Ansprüche 5 oder 6, **dadurch gekennzeichnet, dass** zumindest eine der Halbschalen (60), insbesondere die Vertiefung, eine geringere Gesamthöhe aufweist als dessen Radius.

8. Fahrrad (10) nach einem der vorhergehenden Ansprüche, **dadurch gekennzeichnet, dass** zwischen der Abdeckung und der Ladeanschlussbuchse (50) und/oder dem Fahrradrahmen (12) ein Dichtungselement (70) angeordnet ist.

9. Fahrrad (10) nach zumindest einem der Ansprüche 2 oder 8, **dadurch gekennzeichnet, dass** die magnetische Materialpaarung derartig ausgeführt ist, dass die Größe der magnetischen Kraft derartig groß ist, dass das Dichtungselement (70) in der verschlossenen Position der Abdeckung (60), in dessen Höhe um mindestens 5% oder mindestens 10% oder mindestens 25% gestaucht wird.

10. Fahrrad (10) nach einem der vorhergehenden Ansprüche, **dadurch gekennzeichnet, dass** der Fahrradrahmen (12) durch eine Rohkonstruktion gebildet ist und zumindest ein Rohrabschnitt der Rohrkonstruktion zumindest eine Aufnahmeöffnung (14) aufweist, wobei die Ladeanschlussbuchse (50) in der Aufnahmeöffnung (14) angeordnet ist.

11. Fahrrad (10) nach Anspruch 10 **dadurch gekennzeichnet, dass** die Ladeanschlussbuchse (50) derartig in Aufnahmeöffnung (14) angeordnet ist, dass in der geschlossenen Position der Abdeckung (60), die Oberseite der Abdeckung (60) zumindest nahezu bündig mit der Mantelfläche (46) des Rohrabschnittes abschließt oder dass ein Überstand über die Mantelfläche (46) maximal 2mm oder maximal 5mm oder maximal 15 mm beträgt.

12. Fahrrad (10) nach zumindest einem der Ansprüche 10 oder 11, **dadurch gekennzeichnet, dass** die Aufnahmeöffnung (12) einer Oberseite des Rohrabschnitt zugeordnet ist, insbesondere einer Oberseite eines das Unterrohr (16) bildenden Rohrabschnitt zugeordnet ist.
